# FASCICULE DE BREVET EUROPEEN

(11) **EP 2 439 130 B1**
(45) Date de publication et mention de la délivrance du brevet: **11.12.2013**
(21) Numéro de dépôt: 11183860.3
(22) Date de dépôt: 04.10.2011
(51) Int. Cl.: B62D 25/08, B60H 1/28, B60J 10/02

(54) **Grille d'auvent sous pare-brise**
Windlaufgrill unter der Windschutzscheibe
Cowl vent grille under a windscreen

(30) Priorité: 08.10.2010 FR 1058200
(43) Date de publication de la demande: 11.04.2012
(73) Titulaire: EUROSTYLE SYSTEMS, 36000 Châteauroux (FR)
(72) Inventeur: Chausset, François, 36250 SAINT MAUR / FRANCE (FR)
(74) Mandataire: Berger, Helmut

(56) Documents cités:
- EP-A2- 2 067 691
- DE-A1-102005 049 642
- FR-A1- 2 891 199
- JP-A- 58 218 474
- US-A1- 2008 211 255

## Description

La présente invention concerne l'agencement d'une grille d'auvent par rapport à un pare-brise fixé sur une structure d'un véhicule, notamment d'un véhicule automobile, ainsi qu'une grille d'auvent.

Le document FR 289 1 199 décrit les préambules des revendications indépendentes 1 et 4.

Généralement, les véhicules automobiles sont équipés d'une grille d'auvent disposée à la base du pare-brise. La grille d'auvent permet à la fois de canaliser les eaux de ruissellement descendant du pare-brise et de faciliter l'entrée d'air au groupe de ventilation de l'habitacle du véhicule.

La grille d'auvent est disposée par rapport au pare-brise le plus souvent selon l'une ou l'autre de deux possibilités principales. La première consiste à placer la grille d'auvent par-dessus le bord inférieur du pare-brise. Dans ce cas, la jonction est munie d'un joint souple d'étanchéité maintenu en place par un système d'agrafes introduites sous la structure portant le pare-brise.

Selon la seconde possibilité, la grille est placée dans la continuité de la surface extérieure du pare-brise et est maintenue par clipage dans un profil étanche lui-même collé sur la tranche du pare-brise.

L'une et l'autre de ces deux possibilités de disposition et de montage d'une grille d'auvent ont fait leur preuve. Cependant, l'une et l'autre impliquent un montage assez complexe et notamment la disposition d'un joint d'étanchéité.

Le but de l'invention est de proposer une solution plus simple pour l'agencement et le montage d'une grille d'auvent par rapport à un pare-brise d'un véhicule.

Le but de l'invention est atteint avec un agencement d'une grille d'auvent par rapport à un pare-brise fixé sur une structure d'un véhicule, la grille d'auvent étant disposé entre la structure et le pare-brise en recouvrement partiel avec le pare-brise.

En disposant la grille d'auvent partiellement en dessous du bord inférieur du pare-brise et en la faisant recouvrir partiellement par celui-ci, on permet aux eaux de ruissellement descendant le pare-brise de s'écouler de ce dernier sur la grille d'auvent tout en empêchant l'eau de remonter dans la zone de chevauchement.

La disposition selon l'invention de la grille d'auvent par rapport au pare-brise rappelle la disposition de tuiles sur un toit. Avantageusement, mais pas nécessairement, la grille d'auvent est disposée par rapport au bord inférieur du pare-brise avec une distance transversale entre les deux.

Selon une caractéristique supplémentaire de l'invention, la grille d'auvent et le pare-brise se recouvrent sur une zone suffisamment longue pour éviter que l'eau de ruissellement remonte entre le pare-brise et la grille d'auvent par capillarité et par la pression exercée par le vent lorsque le véhicule se déplace.

La grille d'auvent est formée de façon à pouvoir la fixer sur la structure du véhicule par des clips. Ces clips peuvent être formés de matière avec la grille d'auvent, mais ils peuvent également être rapportés à la grille. Un tel mode de fixation facilite le montage et le démontage de la grille d'auvent.

Le but de l'invention est également atteint avec une grille d'auvent comprenant une partie adaptée pour être disposée en recouvrement partiel et en dessous d'un pare-brise d'un véhicule.

La présente invention concerne également les caractéristiques ci-après considérées isolément ou selon toute combinaison techniquement possible:
- la grille d'auvent comprend des moyens de fixation rapide adaptés pour fixer la grille d'auvent par enclenchement sur une structure du véhicule sur laquelle est également fixé le pare-brise ;
- la grille d'auvent est pourvue d'au moins un trou de passage entouré d'un rebord montant, pour le passage d'un axe d'essuie-vitre;
- la grille d'auvent est pourvue d'un pli formant muret séparant la partie adaptée pour être disposée en dessous du pare-brise d'une partie pourvue d'ouvertures pour l'entrée d'air de ventilation.

Le but de l'invention est aussi atteint avec un véhicule, notamment un véhicule automobile, équipé d'une grille d'auvent telle que décrite dans la présente description.

D'autres caractéristiques et avantages de la présente invention ressortiront de la description ci-après d'un mode de réalisation de l'invention. La description est faite en référence aux dessins annexés dont
la figure 1 représente une grille d'auvent selon l'invention en une vue en perspective,
la figure 2 représente la disposition de la grille d'auvent par rapport à un pare-brise en une coupe transversale,
la figure 3 représente la grille d'auvent de l'invention au début d'une mise en place sur la structure d'un véhicule et
la figure 4 représente la grille d'auvent mise en place.

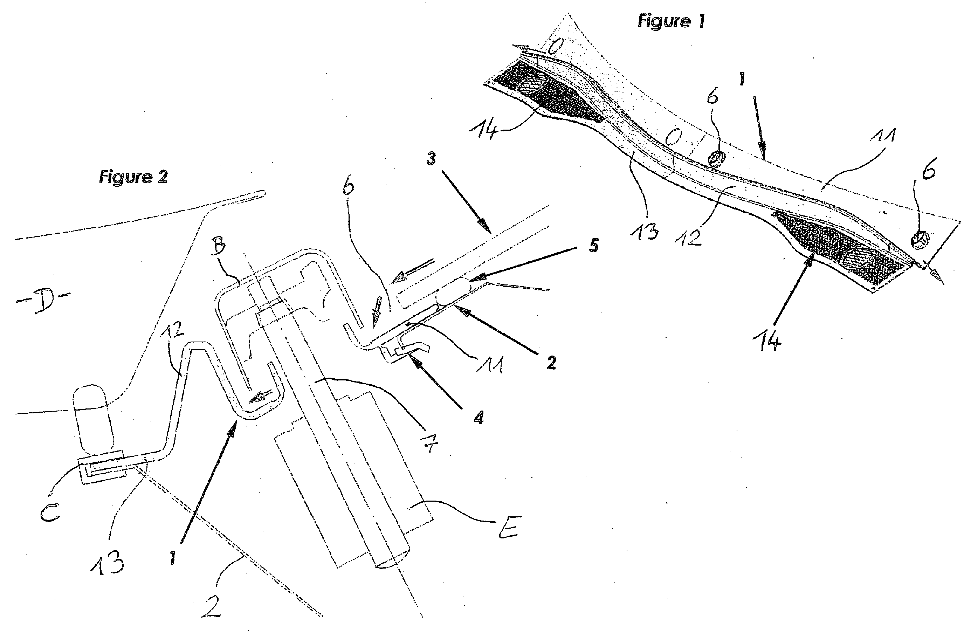

La figure 1 représente, en une vue en perspective, une grille d'auvent selon la présente invention pour un véhicule automobile. La grille d'auvent est un profilé allongé adapté pour être disposé le long du bord inférieur d'un pare-brise du véhicule. La forme précise de la grille d'auvent 1 dépend à la fois de la forme du pare-brise et de la forme de la structure du véhicule sur laquelle la grille d'auvent doit être fixée et qui porte aussi le pare-brise.

La grille d'auvent 1 comprend une première partie 11 formée de façon à pouvoir être glissée entre la structure du véhicule et le bord inférieur du pare-brise. Cette première partie est délimitée par un muret 12 destiné à collecter l'eau de ruissellement descendant du pare-brise et à faire écouler cette eau soit par les extrémités de la grille d'auvent 1 et donc vers les côtés du véhicule soit par un trou de passage central formé par exemple au centre du muret 12.

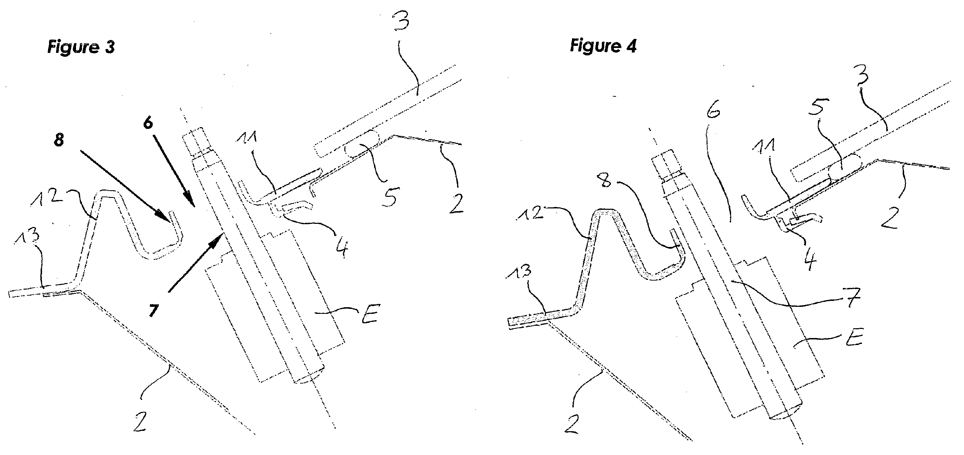

La première partie 11 est pourvue de deux trous de passage 6, un pour chacun des axes de deux essuie-vitre, comme représenté sur les figures 2 à 4, lorsque la grille d'auvent 1 est destinée à être montée sur un véhicule ayant deux essuie-vitre. Les trous de passage 6 sont délimités par des rebords montants 8 empêchant des entrées d'eau (voir figure 3).

La grille d'auvent 1 comprend également une seconde partie 13 pourvue de grilles 14 pour le passage d'air vers un système de ventilation de l'habitacle du véhicule.

La figure 2 est une vue en coupe transversale représentant la disposition d'une grille d'auvent 1 selon l'invention sur une structure 2 d'un véhicule automobile et par rapport à un pare-brise 3 du véhicule collé sur la structure 2 au moyen d'un joint de collage 5.

Les dimensions de la grille d'auvent 1 sont déterminées de façon que la première partie 11 de celle-ci puisse être glissée sous le bord inférieur du pare-brise jusqu'au joint de collage 5 et que la seconde partie 13 puisse être engagée dans, et retenue par, un moyen de fixation C disposé sur la structure 2 du côté d'un capot-moteur D du véhicule. Lorsque la grille d'auvent 1 est mise en place, le pare-brise 3 recouvre la grille d'auvent sur une zone de recouvrement partiel 31 (voir figure 4). De cette manière, de l'eau de pluie ou de ruissellement descendant le pare-brise 3 tombe sur la grille d'auvent 1 et s'écoule, selon la forme précise du muret 12 de la grille d'auvent 1, vers les côtés du véhicule ou vers un trou d'écoulement (non représenté) formé par exemple au bas du muret 12 en son centre. L'écoulement de l'eau est indiqué par trois flèches orientées dans la direction de l'écoulement.

La figure 2 montre aussi le passage d'un axe 7 d'un essuie-vitre E par un des trous de passage 6 de la grille d'auvent 1 et la position d'un bras d'essuie-vitre B sur l'axe 7, le bras B couvrant le trou 6.

Afin de pouvoir être fixée sur la structure 2 du véhicule, la grille d'auvent 1 est pourvue de clips 4 formés sur la surface inférieure de la grille d'auvent 1. Les clips 4 s'engagent dans des ouvertures 21 (voir figure 3) pratiquées à cet effet dans la structure 2. L'immobilisation des clips 4 dans les ouvertures 21, et ainsi l'immobilisation de la grille d'auvent 1 dans sa position de montage, peut être obtenue de différentes manières, par exemple par des crochets anti-retour formés sur les clips ou par une forme appropriée des clips faisant coopérer le bord arrière des clips avec les bords correspondants des ouvertures 21.

La structure 2 du véhicule et la grille d'auvent 1 sont formés assez longs dans le sens longitudinal de montage, pour que la grille d'auvent 1 puisse être placée, lors de son montage, au plus bas par rapport au pare-brise et afin de pouvoir la remonter ensuite au plus haut sous le pare-brise 3 jusqu'au joint de collage 5 de celui-ci sur la structure 2. En même temps, les trous de passage 6 et les rebords 8 sont assez grands en diamètre pour permettre d'effectuer la cinématique de montage décrite ci avant.

La cinématique de montage est visible sur les figures 3 et 4. Selon cette cinématique, la grille d'auvent 1 est enfilée sur le ou les axes 7 d'essuie-vitre et tenue le plus éloigné possible du pare-brise 3. Ensuite, la grille d'auvent 1 est poussée en direction du pare-brise 3 de façon à pouvoir être placée en dessous du bord inférieur du pare-brise. En même temps, les clips 4 s'engagent dans les ouvertures 21 prévues à cet effet dans la structure 2 du véhicule.

## Revendications

1. Agencement d'une grille d'auvent (1) par rapport à un pare-brise (3) fixé sur une structure (2) d'un véhicule, la grille d'auvent (1) étant disposée entre la structure (2) et le pare-brise (3) en recouvrement partiel avec le pare-brise (3), la grille d'auvent (1) étant fixée sur la structure (2) par des moyens de fixation rapide (4), **caractérisé en ce que** la grille d'auvent (1) est fixée sur la structure (2) par des clips (4) formés sur la surface inférieure de la grille d'auvent(1) et enclenchés à cet effet dans la structure (2).

2. Agencement selon la revendication 1, **caractérisé en ce que** la grille d'auvent (1) est transversalement espacée du pare-brise (3).

3. Agencement selon la revendication 1, **caractérisé en ce que** la grille d'auvent (1) et le pare-brise (3) se recouvrent sur une zone (31) suffisamment longue pour éviter une remontée d'eau de pluie.

4. Grille d'auvent comprenant une partie (11) adaptée pour être disposée en recouvrement partiel et en dessous d'un pare-brise (3) d'un véhicule ainsi que des moyens de fixation rapide (4) adaptés pour fixer la grille d'auvent (1) par enclenchement sur une structure (2) du véhicule sur laquelle est également fixé le pare-brise (3), **caractérisée en ce que** les moyens de fixation rapide sont réalisés sous la forme de clips (4) formés sur la surface inférieure de la grille d'auvent (1).

5. Grille d'auvent selon la revendication 4, **caractérisée en ce que** les clips (4) sont formés de matière avec la grille d'ouvrant (1).

6. Grille d'auvent selon la revendication 4, **caractérisée en ce que** les clips (4) sont rapportés à la grille d'auvent (1).

7. Grille d'auvent selon l'une quelconque des revendications 4 à 6, **caractérisée en ce qu'**elle est pourvue d'au moins un trou de passage (6) formé avec un rebord montant (8) pour un axe d'essuie-vitre (7).

8. Grille d'auvent selon l'une quelconque des revendications 4 à 7, **caractérisée en ce qu'**elle est pourvue d'un pli formant muret (12) séparant la partie (11) adaptée pour être disposée en dessous du pare-brise d'une partie (13) pourvue d'ouvertures (14) pour l'entrée d'air de ventilation.

9. Véhicule automobile, **caractérisé en ce qu'**il comprend une grille d'auvent (1) selon l'une quelconque des revendications 4 à 8 agencée selon l'une quelconque des revendications 1 à 3,

## Patentansprüche

1. Anordnung eines Windlaufgitters (1) im Verhältnis zu einer Windschutzscheibe (3), die auf einer Struktur (2) eines Fahrzeugs befestigt ist, wobei das Windlaufgitter (1) zwischen der Struktur (2) und der Windschutzscheibe (3) in partieller Überlappung mit der Windschutzscheibe (3) angeordnet ist, wobei das Windlaufgitter (1) auf der Struktur (2) anhand von Schnellbefestigungsmitteln (4) befestigt ist, **dadurch gekennzeichnet, dass** das Windlaufgitter (1) auf der Struktur (2) durch Klemmen (4) befestigt ist, die auf der Innenfläche des Windlaufgitters (1) ausgebildet sind und zu diesem Zweck in der Struktur (2) rasten.

2. Anordnung nach Anspruch 1, **dadurch gekennzeichnet, dass** das Windlaufgitter (1) quer von der Windschutzscheibe (3) beabstandet ist.

3. Anordnung nach Anspruch 1, **dadurch gekennzeichnet, dass** das Windlaufgitter (1) und die Windschutzscheibe (3) in einer Zone (31) überlappen, die ausreichend lang ist, um ein Aufsteigen von Regenwasser zu verhindern.

4. Windlaufgitter, das einen Abschnitt (11) umfasst, der ausgebildet ist, um in partieller Überlappung und unter einer Windschutzscheibe (3) eines Fahrzeugs angeordnet zu sein, sowie Schnellbefestigungsmittel (4), die ausgebildet sind, um das Windlaufgitter (1) durch Rasten auf einer Struktur (2) des Fahrzeugs zu befestigen, auf der auch die Windschutzscheibe (3) befestigt ist, **dadurch gekennzeichnet, dass** die Schnellbefestigungsmittel in Form vom Klemmen (4) umgesetzt sind, die auf der Innenseite des Windlaufgitters (1) ausgebildet sind.

5. Windlaufgitter nach Anspruch 4, **dadurch gekennzeichnet, dass** die Klemmen (4) aus demselben Teil wie das Windlaufgitter (1) ausgebildet sind.

6. Windlaufgitter nach Anspruch 4, **dadurch gekennzeichnet, dass** die Klemmen (4) am Windlaufgitter (1) angesetzt sind.

7. Windlaufgitter nach einem der Ansprüche 4 bis 6, **dadurch gekennzeichnet, dass** es mit mindestens einer Durchgangsöffnung (6) ausgestattet ist, die mit einer aufsteigenden Kante (8) für eine Scheibenwischerwelle (7) ausgebildet ist.

8. Windlaufgitter nach einem der Ansprüche 4 bis 7, **dadurch gekennzeichnet, dass** es mit einer Falte ausgestattet ist, die eine Wand (12) bildet, die den Abschnitt (11), der ausgebildet ist, um unter der Windschutzscheibe angeordnet zu sein, von einem Abschnitt (13) trennt, der mit Öffnungen (14) für den Eintritt von Lüftungsluft ausgestattet ist.

9. Kraftfahrzeug, **dadurch gekennzeichnet, dass** es ein Windlaufgitter (1) nach einem der Ansprüche 4 bis 8 umfasst, das nach einem der Ansprüche 1 bis 3 ausgebildet ist.

## Claims

1. An arrangement of a cowl vent grille (1) with respect to a windscreen (3) fastened on the structure (2) of a vehicle, the cowl vent grille (1) being positioned between the structure (2) and the windscreen (3) partially overlapping the windscreen (3), the cowl vent grille (1) being fastened on the structure (2) using quick fastening means (4), **characterized in that** the cowl vent grille (1) is fastened on the structure (2) by clips (4) formed on the lower surface of the cowl vent grill (1) and engaged to that end in the structure (2).

2. The arrangement according to claim 1, **characterized in that** the cowl vent grille (1) is transversely separated from the windscreen (3).

3. The arrangement according to claim 1, **characterized in that** the cowl vent grille (1) and the windscreen (3) overlap one another over a long enough zone (31) to prevent rainwater from rising.

4. A cowl vent grille comprising a part (11) suitable for being positioned partially overlapping and below the windscreen (3) of a vehicle as well as quick fastening means (4) suitable for fastening the cowl vent grille (1) by engaging on a structure (2) of the vehicle on which the windscreen (3) is also fastened, **characterized in that** the quick fastening means are made in the form of clips (4) formed on the lower surface of the cowl vent grille (1).

5. The cowl vent grille according to claim 4, **characterized in that** the clips (4) are made integral with the cowl vent grille (1).

6. The cowl vent grille according to claim 4, **characterized in that** the clips (4) are attached to the cowl vent grille (1).

7. The cowl vent grille according to any one of claims 4 to 6, **characterized in that** it is provided with at least one passage hole (6) formed with a rising rim (8) for a windshield wiper shaft (7).

8. The cowl vent grille according to any one of claims 4 to 7, **characterized in that** it is provided with a fold forming a low wall (12) separating the part (11) suitable for being positioned below the windscreen from a part (13) provided with openings (14) for the entry of ventilation air.

9. A motor vehicle, **characterized in that** it comprises a cowl vent grille (1) according to any one of claims 4 to 8 arranged according to any one of claims 1 and 3.
